# EUROPÄISCHE PATENTANMELDUNG

(11) **EP 1 005 977 A1**
(43) Veröffentlichungstag der Anmeldung: **07.06.2000**
(21) Anmeldenummer: 99811093.6
(22) Anmeldetag: 26.11.1999
(51) Int. Cl.: B32B 15/08, B32B 27/08, B32B 27/36, B32B 27/34, B32B 27/32, B65D 65/40

(54) **Kaltverformbare Verbundfolie**

(30) Priorität: 02.12.1998 CH 239698
(71) Anmelder: Alusuisse Technology & Management AG, 8212 Neuhausen am Rheinfall (CH)
(72) Erfinder: Zeiter, Patrik, 8044 Zürich (CH); Pasbrig, Erwin, 78224 Singen (DE); Breitler, Hans Peter, 8280 Kreuzlingen (CH)

(57) **Zusammenfassung**

Kaltverformbare Verbundfolien, beispielsweise für die Erzeugung von Durchdrück- oder Blisterpackungen, resp. Bodenteile davon, und für Verpackungen oder Formteile für medizinische Instrumente und Applikatoren, enthaltend eine wasserdampf- und gasundurchlässige Sperrschicht und beidseitig der Sperrschicht wenigstens eine Kunststoffschicht.

Die Verbundfolie einen Schichtaufbau aufweist, enthaltend nacheinander:
a) eine Kunststoff-Schicht (10) aus der Reihe der gereckten oder orientierten Folien des Polyvinylchlorids, des Polyesters, des Polypropylens, des Polyamids, des Cycloolefin-Copolymeres, der gegossenen Filme des Polyvinylchlorids oder des Polypropylens und
b) eine Metallfolie (11), wie Aluminiumfolie, und
c) eine orientierte Polyamidfolie (12) in einer Dicke von 25 bis 32µm.

Die freien Seiten der ersten und/oder der zweiten Kunststoff-Folie können eine Siegelschicht aufweisen oder die erste und/oder die zweite Kunststoff-Folie können siegelbar sein.

Die Verbundfolien können beispielsweise mittels eines Tiefungsprozesses, wie durch Streckziehen, d.h. durch mechanische Kaltumformung mittels Formenstempel, zu Verpackungen verarbeitet werden. Beim Streckziehen wird die Verbundfolie zwischen der Matrize und dem Niederhalter festgehalten, während ein Formenstempel der Verbundfolie unter Verstreckung die gewünschte Kontur aufzwingt.

## Beschreibung

Vorliegende Erfindung betrifft kaltverformbare Verbundfolien, enthaltend eine wasserdampf- und gasundurchlässige Sperrschicht und beidseitig der Sperrschicht wenigstens eine Kunststoffschicht und die Verwendung der Verbundfolien.

Aus der EP-A 0 845 350 sind kaltverformbare Verbundfolien, beispielsweise für sogenannte Blister- oder Durchdrückpackungen bekannt. Es werden Kunststofflaminate, enthaltend eine Metallfolie, beschrieben, die derart getieft werden können, dass eine Mehrzahl von Vertiefungen oder Näpfchen entstehen. Zwischen den einzelnen Vertiefungen bilden sich Schultern aus. Die Schultern laufen vollständig um jede Vertiefung und bilden eine ebene Schulterfläche. Die derart vorbereiteten Materialien bilden den Bodenteil einer Blisterpakkung aus. Die Bodenteile können mit den Inhaltsstoffen befüllt werden. Bekannt ist, als Inhaltsstoff z.B. Tabletten, Kapseln, Dragées usw. aus dem pharmazeutischen Bereich, einzeln oder allenfalls zu mehreren, in jede Vertiefung einzufüllen. Anschliessend wird der Bodenteil, in der Regel mit einer Deckfolie, wie einer Metallfolie, zweckmässig Aluminiumfolie, oder einem Folienverbund, welcher beispielsweise eine Siegelschicht und eine Metallfolie enthält, durch Siegeln über die Siegelschicht an den Schultern der Bodenteile, verschlossen.

Die beschriebenen Verbundfolien besitzen an sich eine gute Verformbarkeit. Das Verhältnis von Durchmesser zu Tiefe der Vertiefung bei Blistern kann in weiten Bereichen gewählt werden, d.h. die Wände der Vertiefungen können geringe oder hohe Steilheit aufweisen. Es entstand jedoch das Bedürfnis, Verbundfolien zur Verfügung zu haben, deren Verformbarkeit noch weiter verbessert ist. Verbundfolien mit weiter verbesserter Verformbarkeit werden beispielsweise für Verpackungslösungen im Bereich medizinischer Instrumente und Applikatoren verlangt.

Aufgabe vorliegender Erfindung ist eine Verbundfolie für beispielsweise Durchdrück- oder Blisterpackung für z .B. Ampullen, Kapseln oder Tabletten, enthaltend pharmazeutische Wirkstoffe oder Diagnostika, Pulver oder flüssige bis pastöse Stoffe aus den Bereichen Pharmazeutika und Kosmetika oder für medizinische Instrumente und Applikatoren, mit hoher Schutzfunktion gegen eine Aufnahme von Wasserdampf und Gasen, zur Verfügung zu stellen. Bei beispielsweise Durchdrück- oder Blisterpackung soll die Verpackungsgrösse, bezogen auf die Zahl der Vertiefungen, klein gehalten werden können, beispielsweise durch steile Wände an den Vertiefungen oder insgesamt durch tieferes Verformen. Auch soll es möglich sein z.B. kleinere Schulterflächen vorzusehen und trotzdem soll eine sichere gas- und dampf-, resp. feuchtigkeitsdichte Siegelung zwischen Bodenteil und Deckelteil erreicht werden.

Erfindungsgemäss wird dies dadurch erreicht, dass die Verbundfolie einen Schichtaufbau aufweist, enthaltend übereinander:
a) eine Kunststoff-Schicht aus der Reihe Folien des Polyvinylchlorids, des Polyesters, des Polypropylens, des Polyamids, der Cycloolefin-Copolymere, der gegossenen Filme des Polyvinylchlorids oder des Polypropylens,
b) eine Metallfolie und
c) eine orientierte Polyamidfolie in einer Dicke von 25 bis 32 µm.

Bei den Kunststoff-Folien a) und c) kann es sich -- unabhängig voneinander -- um eine Monofolie oder um einen Folienverbund aus zwei oder mehreren Schichten gleicher oder für a) auch unterschiedlicher, Kunststoffe handeln.

Um das Verformungsverhalten zu beeinflussen und die Materialmengen in wirtschaftlichen Grenzen zu halten, werden die Kunststoff-Folien a), welche zu den vorliegenden Verbundfolien verarbeitet werden, in zweckmässigen resp. vorzugsweisen Dicken angewendet. Z.B. weisen ungereckte PVC-Folien eine Dicke von 60 bis 100 µm auf. PVC-Folien können bevorzugt monaxial oder auch biaxial gereckt sein. Gereckte, wie monoaxial oder biaxial gereckte PVC-Folien können eine Dicke von 20 bis 100 µm, zweckmässig von 30 bis 60 µm, vorzugsweise von 30 bis 40 µm, aufweisen. Die Polyesterfolien können monoaxial oder biaxial gereckt , d.h. orientiert, sein und eine Dicke von 5 bis 60 µm, zweckmässig von 12 bis 32 µm und vorzugsweise von 15 bis 25 µm aufweisen. Die Polypropylenfolien können monoaxial oder biaxial gereckt , d.h. orientiert, sein und eine Dicke von 12 bis 30 µm und zweckmässig von 20 bis 30 µm aufweisen. Die Cycloolefin-Copolymere-Folien können monoaxial oder biaxial gereckt , d.h. orientiert, sein und eine Dicke von 10 bis 50 µm, zweckmässig 15 bis 40 µm und vorzugsweise von 20 bis 30 µm aufweisen. Sind die Kunststoff-Folien a) monoaxial oder biaxial gereckte, d.h. orientierte, Polyamidfolien, so weisen diese eine Dicke beispielsweise von 5 bis 40 µm, zweckmässig von 10 bis 32 µm und vorzugsweise von 15 bis 30 µm auf. Ist die Kunststoffschicht a) ein gegossener Film des Polyvinylchlorids, so ist die Filmdicke beispielsweise 60 bis 150 µm und zweckmässig 60 bis 100 µm. Ist die Kunststoffschicht a) ein gegossener Film des Polypropylens, so ist die Filmdicke beispielsweise 40 bis 100 µm und zweckmässig 40 bis 60 µm. Die Metallfolien b) können beispielsweise eine Dicke von 5 bis 200 µm, zweckmässsig von 20 bis 100 µm und vorzugsweise von 45 bis 60 µm aufweisen. Die orientierten Polyamidfolien c) weisen eine Dicke von 25 bis 32 µm, zweckmässig von 28 bis 32 µm und vorzugsweise von 30 µm auf.

Die Metallfolie b) kann z.B. aus Stahl, Eisen oder Kupfer sein. Bevorzugt ist eine Aluminiumfolie. Die Aluminiumfolie kann zweckmässig aus einer Aluminiumlegierung AlFeMn, wie AlFe1,5Mn, AlFeSi oder AlFeSiMn, beispielsweise in einer Reinheit von 97,5 und höher, vorzugsweise in einer Reinheit von 98,5 und höher, sein. Die Metallfolie ist vorzugsweise eine ununterbrochene Folie und ist insbesondere texturfrei, homogen unf feinkörnig (Kornzahl grösser als 4000/mm²).

Die Metallfolie b), resp. die Aluminiumfolie, ist entweder nicht mit einem Primer vorbehandelt oder ist beispielsweise ein- oder beidseitig mit einem Primer vorbehandelt.

Geeignete Primer können z.B. aus den Reihen der Einbrennlacke, der Epoxidharze oder der Polyurethane ausgewählt werden.

Die kaltverformbaren Verbundfolien enthalten die Kunststoff-Schicht a) aus thermoplastischen Kunststoffen der Reihe des Polyvinylchlorids, des Polyesters, des Polypropylens, des Polyamids, der Cycloolefin-Copolymere, gegossene Filme des Polyvinylchlorids oder des Polypropylens. Geeignete Thermoplaste zur Erzeugung dieser Folien und Filme sind nachstehend aufgeführt.

Die PVC-Folien sind Folien auf Basis von chlorhaltigen Polymeren, d.h. Polymeren, des Vinylchlorids (PVC) oder von Vinylkunststoffen, enthaltend Vinylchlorideeinheiten in deren Struktur, wie Copolymere des Vinylchlorids mit Vinylestern von aliphatischen Säuren, Copolymere des Vinylchlorids mit Estern der Acryl- oder Methacrylsäure oder mit Acrylnitril, Copolymere des Vinylchlorids mit Dienverbindungen und ungesättigten Dicarboxylsäuren oder deren Anhydriden, Copolymere des Vinylchlorids und Vinylidenchlorids mit ungesättigten Aldehyden, Ketonen usw. oder Polymere und Copolymere des Vinylidenchlorids mit Vinylchlorid oder anderen polymerisierbaren Verbindungen. Die Thermoplaste auf Vinyl-Basis können auch auf an sich bekannte Weise mit Primär- oder Sekundärweichmacher weichgemacht sein. Die genannten vinylchloridhaltigen Materialien können ebenfalls für die gegossenen PVC-Filme eingesetzt werden.

Folien aus PVC sind wenigstens monoaxial (oPVC) gereckt oder können fallweise auch biaxial gereckt sein. Sind die gereckten PVC-Folien monoaxial gereckt, ist deren Dickenabnahme vorzugsweise im Bereich von 30 bis 40%.

Sind die Kunststoffolien aus Polyestern (PET-Folien), so sind Beispiele für die Polyester Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalet), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe. Andere zweckmässige Polyester sind in der Fachwelt unter dem Kürzel PEN bekannt.

Andere Polyester sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol. Bevorzugt sind glykolmodifizierte Polyester, die der Fachwelt als PETG bekannt sind.

Weitere zweckmässige Polyester sind Polylalkylenterephthalate mit Alkylengruppen oder - resten mit 2 bis 10 Kohlenstoffatomen und Polylalkylenterephthalate mit Alkylengruppen oder -resten mit 2 bis 10 Kohlenstoffatomen, die durch ein oder zwei -0- unterbrochen sind. Weitere bevorzugte Polyester sind Polylalkylenterephthalate mit Alkylengruppen oder -resten mit 2 bis 4 Kohenstoffatomen. Zu diesen Polyethylenterephthalaten sind auch A-PET, PETP und das genannte PETG oder G-PET zu zählen. Ganz besonders bevorzugt sind Polyethylenterephthalat-Folien. Die Folien aus Polyester können mono- oder vorzugsweise biaxial orientiert sein.

Das Polypropylen für Folien oder Beschichtungen kann ein isotaktisches, syndiotaktisches oder ataktisches Polypropylen oder ein Gemisch davon sein. Das Polypropylen kann amorph, teilkristallin, kristallin oder hochkristallin sein. Es können auch Block-Copolymere oder Random-Copolymere des Polypropylens angewendet werden. Die mittlere Molmasse kann z.B. von unter 10'000 bis zu 600'000 und höher betragen. Die Polypropylen-Folien können mono- oder biaxial verstreckt sein.

Sind die Kunststofffolien Polyamidfolien (PA), so gehören zu den Polyamiden beispielsweise Polyamid 6, ein Homopolymerisat aus ε-Caprolactam (Polycaprolac- tam); Polyamid 11, Polyamid 12, ein Homopolymerisat aus ω-Laurinlactam (Polylaurin- lactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon. Die Folien aus Polyamid sind mono- oder vorzugsweise biaxial orientiert sein (oPA). Die genannten Polyamide können auch zur Herstellung der orientierten Polyamidfolie c) verwendet werden.

Mit Cycloolefin-Copolymeren sind thermoplastische Olefin-Polymere mit amorpher Struktur beschrieben, die im wesentlichen Copolymere aus Ethylen und 2-Norbornen oder Tetracyclododecen darstellen. Der Norbornen-Gehalt im Ethylen-Norbornen-Cycloolefin-Copolymeren kann beispielsweise von 12 bis 80 mol-%, vorzugsweise 52 mol-%, betragen. Die Polymerisation kann durch Metallocen-Katalysatoren, einer Polymersation in Lösung und dem Druck des Ethylens gesteuert werden. Die Cycloolefin-Copolymere können amorph sein oder Kristallinität aufweisen.

Vorliegende Verbundfolien können, um die Siegeleigenschaften zu steuern, auf einer oder beiden freien Seiten Siegelschichten, wie Siegelfolien, siegelbare Beschichtungen oder Siegellacke, z. B. auf Basis von Ethylen-Acryl-Säure (EAA), Polyolefinen, wie Polyethylenen, Polypropylenen, Polyacrylaten, PVC-Harzen, Polyvinylidenchloriden, EVA, Polyethylenterephthalate, insbesondere des Types A-PET, usw. aufweisen. Die freien Seiten oder wenigstens eine der freien Seiten, insbesondere der orientierten Polyesterfolien, können mit EVA (Ethylen/Vinylalkohol-Copolymer) oder einer amorphen Polyester-Siegelschicht des Types PET-A beschichtet sein. Beispiele bevorzugter Siegelschichten sind Siegellacke enthaltend Polyethylen oder eine Folie aus ca. 40 µm dickem Polypropylen.

Bevorzugt werden kaltverformbare Verbundfolien, welche einen Schichtaufbau aufweisen, enthaltend übereinander:
a) eine Kunststoff-Folie aus der Reihe der gereckten PVC-Folien in einer Dicke von 30 bis 60 µm,
b) eine Metallfolie und
c) eine orientierte Polyamidfolie in einer Dicke von 25 bis 32 µm.

Weitere bevorzugte kaltverformbare Verbundfolien nach vorliegender Erfindung sind solche, enthaltend übereinander:
a) eine orientierte Polyamidfolie in einer Dicke von 25 bis 32 µm,
b) eine Metallfolie und
c) eine orientierte Polyamidfolien in einer Dicke von 25 bis 32 µm.

Beispiele von bevorzugten Verbundfolien weisen folgenden Aufbau auf:

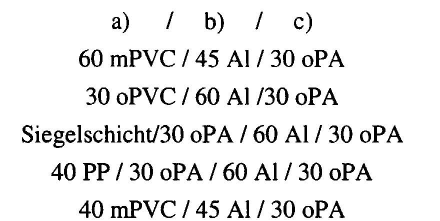

wobei m für monoaxial gereckt, o für biaxial gereckt, PVC für Polyvinylchlorid-Folie, PA für Polyamid-Folie, PP für eine Siegelschicht aus Polypropylen und Al für Aluminiumfolie steht und die Zahlen die Dicke der Folien in µm angeben.

Die einzelnen Schichten und insbesondere Folien, d.h. die Kunststoff-Folie a) gegen die Metallfolie b) und/oder die Polyamidfolie c) gegen die Metallfolie b) und allfällige auf die freien Seiten der Verbundfolie zu liegen kommende Siegelfolien, können mittels eines Primers, Haftvermittlers und/oder Kaschierklebers oder durch Extrusionsbeschichtung mittels EAA miteinander verbunden werden.

Geeignete Kaschierkleber können lösungsmittelhaltig oder lösungsmittelfrei und auch wasserhaltig sein. Beispiele von Kaschierklebern sind lösungsmittelhaltige, lösungsmittelfreie oder wässrige Acrylatkleber oder Polyurethan-Kleber-Systeme. Aber auch Klebstoffe welche unter Einwirkung von energiereicher Strahlung (z.B. UV; Elektronen-Strahlen) aushärten, können eingesetzt werden.

Bevorzugt werden Kaschierkleber auf Polyurethan-Basis.

Als Haftvermittler können beispielsweise Produkte auf Basis von Di-isocyanat oder aliphatischen Polyestern eingesetzt werden.

Der Kaschierkleber, wie auch der Haftvermittler oder Primer, kann beispielsweise in Mengen von 0,5 bis 10 g/m² vorzugsweise in Mengen von 2 bis 8 g/m² und insbesondere in Mengen von 3 bis 6 g/m² angewendet werden. Die Kaschierkleber, Haftvermittler oder Primer können auch in solchen Mengen angewendet werden, dass sie Schichten von beispielsweise wenigstens 0,1 µm Dicke und maximal 12 µm Dicke ausbilden.

Die Oberfläche der Metallfolie b) kann durch entsprechende Vorbehandlung (z.B. bürsten, chromatieren, Ionisierungs-, Ozon-, Korona-, Flamm- oder Plasmabehandlung) eine verbesserte Haftung für den Kleber oder Lack oder für eine Extrusionsschicht aufweisen. Zur Unterstützung und Verbesserung der Verbundhaftung der Lacke, Haftvermittler oder Kaschierkleber zwischen der Kunststoffolie a) oder von gegossenen Filmen, resp. der Polyamidfolie c), ist es oft zweckmässig den Folien auf den kleberzugewandten Seiten oder den Extrudaten eine ausreichende Oberflächenspannung zu vermitteln. Die Erhöhung der Oberflächenspannung kann vorzugsweise durch eine Ionisierungs-, Ozon-, Plasma-, Flamm- oder eine Koronavorbehandlung erfolgen.

Es kann auch vorteilhaft sein, die Kunststoff-Folie a) oder die Polyamidfolie c), jeweils mit der Metallfolie b), ohne Kaschierkleber und/oder Haftvermittler, nur unter Druck und Wärmeeinwirkung (Heisskalandrieren), mit der Metallfolie zu verbinden.

Die erfindungsgemässen Verbundfolien können auf einer oder beiden freien Seiten, -- oder an einem daraus hergestellten Verpackungsbehälter dem Füllgut zugewandten Seite, auch Innenseite genannt, fallweise auch auf der am Verpackungsbehälter nach aussen weisenden Seite, auch Aussenseite genannt -- eine Siegelschicht, wie eine Siegelfolie, eine Siegelbeschichtung oder einen Siegellack aus den genannten Materialien aufweisen. Der Verpakkungsbehälter kann ein Bodenteil einer Durchdrückpackung oder einer anderen Verpackung sein. Die Packungen können einem Schulterbereich und wenigstens einer darin angeordneten Vertiefungen aufweisen. Die Siegelschicht ermöglicht es, an diesem Verpakkungsbehälter, d.h. dem Bodenteil, aus der kaltverformten Verbundfolie nach vorliegender Erfindung, einen Deckel anzubringen. Solche Deckel können beispielsweise Deckelfolien sein, die über den Schulterbereich am Verpackungsbehälter angesiegelt oder angeklebt werden. Geeignete Deckelfolien können eine Metallfolie, wie eine Aluminiumfolie, enthalten und auf der Metallfolie können auf einer oder beiden Seiten Kunststoffolien und/oder Lacke aufgebracht sein. Auf der an einer Verpackung nach aussen gerichteten Seite der Deckelfolie kann auch ein Papierschicht oder Kunststoff/Papierschicht angeordnet sein. Auf wenigstens einer Seite der Deckelfolie kann eine äusserste Schicht in Form einer Siegelschicht vorgesehen sein. Über die Siegelschicht an der Deckelfolie oder über die Siegelschicht am Bodenteil oder über beide Siegelschichten kann der Bodenteil und die Deckelfolie miteinander verbunden werden.

Auf der Innenseite und/oder der Aussenseite oder gegen die Innen- und/oder die Aussenseite gerichtet, jeweils auf einen Verpackungsbehälter aus der erfindungsgemässen Verbundfolie bezogen, können die Verbundfolien Lacke und/oder Druckmuster aufweisen. Beispielsweise können die erste und/oder die zweite Folie des Verbundes auf der Metallfolien zugewandten Seite einen Konterdruck aufweisen. Ein Konterdruck ist besonders für durchsichtige und durchscheinende Folien geeignet. Es ist auch möglich die erste und/oder die zweite Folie auf deren Aussenseiten mit einem Druckmuster zu versehen und fallweise das Druckmuster mit einem Lack abzudecken. Es kann auch die Aussen- und/oder die Innenseite des Verbundes mit einem Lack versehen werden, wobei der Lack fallweise auch bedruckt sein kann und/oder auf den Abpackanlagen bedruckbar ist.

Vorliegende Erfindung betrifft auch Blisterverpackungen oder Durchdrückpackungen oder Bodenteile dafür und Verpackungen oder Formteile für medizinische Instrumente und Applikatoren, aus einer kaltverformten Verbundfolie nach vorliegender Erfindung.

Aus der erfindungsgemässen Verbundfolie können beispielweise mittels eines Tiefungsprozesses, wie durch Streckziehen, d.h. durch mechanische Kaltumformung mittels Formenstempel, die gewünschten Blister- oder Durchdrückpackungen und besonders Bodenteile dafür, oder Formteile von Verpackungen hergestellt werden. Beim Streckziehen wird die Verbundfolie zwischen der Matrize und dem Niederhalter festgehalten, während ein Formenstempel der Verbundfolie unter Verstreckung die gewünschte Kontur aufzwingt. Die Verformung kann beispielsweise kalt oder bei lediglich leicht erhöhten Temperaturen von bis zu 50° C erfolgen. Vorliegende Verbundfolien können aufgrund ihres Verhalten beim Umformen für Blister- und Durchdrückpackungen oder Formteile für Verpackungen enthaltend Vertiefungen mit Wandbereichen hoher Steigung verwendet werden. Es kann beispielsweise eine Steigung der Wandbereiche von 50 Winkelgraden und höher bis zu annähernd 90 Winkelgraden gegenüber der horizontalen Oberfläche der Verbundfolie erzielt werden. Das Verhältnis von Durchmesser zu Tiefe einer einzelnen Vertiefung kann z.B. 2,5 bis 3,0 betragen. Die aus vorliegender Verbundfolie gefertigten Durchdrückpackungen können Seitenkantenlängen von beispielsweise 30 bis 200 mm aufweisen und die Schulterbereiche an den Rändern und zwischen den Vertiefungen können beispielsweise eine Breite von 1 bis 10 mm und vorzugsweise 3 bis 6 mm aufweisen. Solche Blisterpackungen oder Durchdrückpackungen können beispielsweise 2 bis 100, zweckmässig 6 bis 60 und vorteilhaft 10 bis 30 Vertiefungen, Näpfe oder Höfe zur Aufnahme von z. B. von Tabletten, Kapseln, Ampullen, von Dragées oder von Pulvern oder von flüssigen bis pastösen Stoffen. Der Inhalt der Verpackungen kann aus den Bereichen der Kosmetik und Pharmazeutika sein. Ein typisches Beispiel sind Inhalationsprodukte. In einer Vertiefung können auch beispielsweise mehrere Einzelstücke -- oder anstelle der genannten Inhaltstoffe -- z. B. auch technische Kleinteile aufgenommen werden. Formteile für Verpackungen weisen beispielsweise eine oder einige wenige Vertiefungen auf. In diese Vertiefungen können beispielsweise medizinische Geräte oder Applikatoren, wie Inhalatoren und dergl., eingelegt werden.

Die Verbundfolie wird während des Streckziehens aus der reinen Dehnung beansprucht. Dabei zeigt der an der Verpackung nach aussen weisende Kunststoff, in der Regel die zweite Kunststoff-Folie der Verbundfolie, eine hohe Verfestigung während des Verstreckens und eine hohe Dehnfähigkeit auf. Bei der Dehnung der zweiten Kunststoff-Folie wird die Aluminium-Folie mechanisch unterstützt. Dabei sind Dehnungen erreichbar, die weit über der erreichbaren Grenze der Dehnung einer alleinstehenden Aluminiumfolie liegen würde.

Durch die bevorzugte biaxial gereckten Kunststoff-Folien in vorliegender Verbundfolie wird ein isotropes Fliessverhalten der Verbundfolie erreicht und die Erscheinung von Spannungskonzentration vermieden. Sobald die Metall-Folie während des Verformens einzuschnüren beginnt, kann die zweite Kunststoff-Folie die Kraft an dieser Stelle durch die hohe Verfestigung beim Fliessen übernehmen. Während des Streckziehens fliesst das Material der Verbundfolie bevorzugt aus der Breite, statt aus der Dicke. Im weiteren ist eine hohe Bruchdehnung der Verbundfolie zu beobachten. Als weitere bevorzugte Eigenschaft vorliegender Verbundfolie kann sehr oft eine geringe Rückfederung nach der Umformung beobachtet werden.

Die Kunststoff-Folie a), welche bei Verpackungen aus vorliegenden Verbundfolien auf die Innenseite und zum Produkt weist, ist insbesondere physiologisch unbedenklich und darf nur ein geringes oder bevorzugt kein Aufnahmevermögen für Gase und Flüssigkeiten aufweisen. Die Kunststoff-Folie a) weist vorzugsweise eine hohe Steifigkeit auf. Eine weitere bevorzugte Eigenschaft der Kunststoff-Folie a) ist die mechanische Unterstützung der Aluminium-Folie bei der Dehnung.

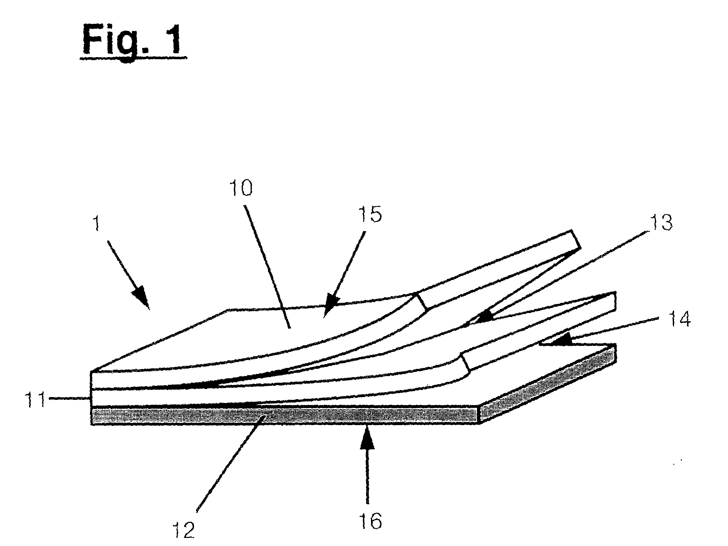

Die Figur 1 zeigt schematisch den Aufbau der erfindungsgemässen Verbundfolie 1. Die Verbundfolie 1 weist eine Metallfolie 11 auf, die auf einer Seite mit der Kunststoff-Folie a) 10 und auf der anderen Seite mit der orientierten Polyamid-Folie c) 12 beschichtet ist. Die Pfeile 13, 14 deuten an, dass zwischen den einzelnen Schichten ein Primer, ein Haftvermittler und/oder ein Kaschierkleber angeordnet werden kann. Sofern die Schichten 10, 11 selbst nicht oder nicht genügend siegelbar sind, kann auf der freien Seiten 15 der ersten Kunststoff-Folie 10 und/oder auf der freien Seiten 16 der orientierten Polyamid-Folie c) 12 eine Siegelschicht in Form eines Siegellackes oder einer siegelfähigen Folie oder Beschichtung angeordnet werden. In der Regel bildet die orientierte Polyamid-Folie c) 12 an einer Verpackung die Aussenseite, während die erste Kunststoff-Folie a) 10 gegen den Inhalt der Verpackung gerichtet ist. Damit lässt sich z.B. eine Querdiffusion durch die Siegelnaht verringern. Eine umgekehrte Anwendung der Verbundfolie, wobei die orientierte Polyamid-folie a) gegen die Innenseite der Verpackung zu liegen kommt, ist möglich.

## Patentansprüche

1. Kaltverformbare Verbundfolien, enthaltend eine wasserdampf- und gasundurchlässige Sperrschicht und beidseitig der Sperrschicht wenigstens eine Kunststoffschicht,
dadurch gekennzeichnet, dass
die Verbundfolie einen Schichtaufbau aufweist, enthaltend übereinander:
a) eine Kunststoff-Schicht aus der Reihe der Folien des Polyvinylchlorids, des Polyesters, des Polypropylens, des Polyamids, der Cycloolefin-Copolymere oder der gegossenen Filme des Polyvinylchlorids oder des Polypropylens,
b) eine Metallfolie und
c) eine orientierte Polyamidfolie in einer Dicke von 25 bis 32 µm.

2. Kaltverformbare Verbundfolien nach Anspruch 1, dadurch gekennzeichnet dass die Verbundfolie einen Schichtaufbau aufweist, enthaltend übereinander:
a) eine Kunststoff-Folie aus der Reihe der gereckten PVC-Folien in einer Dicke von 30 bis 100 µm,
b) eine Metallfolie und
c) eine orientierte Polyamidfolie in einer Dicke von 25 bis 32 µm.

3. Kaltverformbare Verbundfolien nach Anspruch 1, dadurch gekennzeichnet dass die Verbundfolie ein Schichtaufbau aufweist, enthaltend übereinander:
a) eine orientierte Polyamidfolie in einer Dicke von 25 bis 32 µm,
b) eine Metallfolie und
c) eine orientierte Polyamidfolien in einer Dicke von 25 bis 32 µm.

4. Kaltverformbare Verbundfolien nach Ansprüchen 1 bis 3, dadurch gekennzeichnet dass die orientierten Polyamidfolien der Schicht c) und/oder die Kunststoffschicht a) auf der jeweils freien Seite eine Siegelschicht tragen.

5. Kaltverformbare Verbundfolie nach Anspruch 4, dadurch gekennzeichnet dass die orientierte Polyamidfolien c) und/oder die Kunststoffschicht a) auf der jeweils freien Seite eine Siegelschicht aus Polypropylen, vorzugsweise in einer Dicke von 40 µm tragen.

6. Kaltverformbare Verbundfolien nach Anspruch 1, dadurch gekennzeichnet, dass die Kunststoffschicht a) eine ungereckte PVC-Folien einer Dicke von 60 bis 100 µm ist oder eine monoaxial oder biaxial gereckte PVC-Folie einer Dicke von 20 bis 60 µm, zweckmässig von 30 bis 60 µm und vorzugsweise von 30 bis 40 µm oder eine monoaxial oder biaxial gereckte Polyesterfolie einer Dicke von 5 bis 60 µm, zweckmässig von 12 bis 32 µm und vorzugsweise von 15 bis 25 µm oder eine monoaxial oder biaxial gereckte Polypropylenfolie einer Dicke von 12 bis 30 µm und zweckmässig von 12 bis 25 µm oder eine monoaxial oder biaxial gereckte Cycloolefin-Copolymer-Folien einer Dicke von 10 bis 50 µm, zweckmässig 15 bis 40 µm und vorzugsweise von 20 bis 30 µ m oder eine monoaxial oder biaxial gereckte Polyamidfolie einer Dicke von 5 bis 40 µ m, zweckmässig von 10 bis 32 µm und vorzugsweise von 15 bis 30 µm oder ein gegossener Film des Polyvinylchlorids in einer Filmdicke von 60 bis 150 µm und zweckmässig 60 bis 100 µm oder des Polypropylens in einer Filmdicke von 40 bis 100 µm und zweckmässig 40 bis 60 µm ist.

7. Kaltverformbare Verbundfolien nach Anspruch 1, dadurch gekennzeichnet, dass die gereckten orientierten Polyamidfolien c) eine Dicke von 28 bis 32 µm, vorzugsweise 30 µm, aufweisen.

8. Kaltverformbare Verbundfolien nach Anspruch 1, dadurch gekennzeichnet, dass die Verbundfolien einen Aufbau enthaltend folgende Schichten aufweisen: 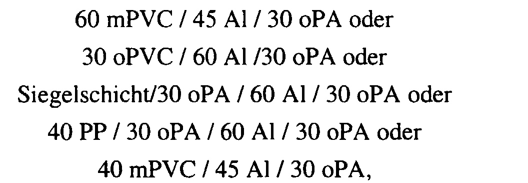 wobei m für monoaxial gereckt, o für biaxial gereckt, PVC für Polyvinylchlorid-Folie, PA für Polyamid-Folie, PP für eine Siegelschicht aus Polypropylen und A1 für Aluminiumfolie steht und die Zahlen die Dicke der Folien in µm angeben.

9. Kaltverformbare Verbundfolie nach Anspruch 1, dadurch gekennzeichnet, dass die orientierte Polyamidfolie c) monoaxial oder biaxial orientiert ist.

10. Kaltverformbare Verbundfolie nach Anspruch 1, dadurch gekennzeichnet dass die Folien des Polyvinylchlorids, des Polyesters, des Polypropylens, des Polyamids oder des Cycloolefin-Copolymeres der Kunststoff-Folie a) axial oder biaxial orientiert sind.

11. Kaltverformbare Verbundfolie nach Anspruch 2, dadurch gekennzeichnet dass die gereckten PVC-Folien monoaxial gereckt sind, vorzugsweise unter einer Dickenabnahme von 30 bis 40 %.

12. Bodenteile von Blisterpackungen oder Durchdrückpackungen für Tabletten, Kapseln, Ampullen, Dragées, Pulver oder für flüssige bis pastöse Stoffe und Verpackungen oder Formteile für Verpackungen von medizinischen Instrumenten und Applikatoren, aus einer kaltverformten Verbundfolie nach Anpruch 1.
